# EUROPÄISCHE PATENTSCHRIFT

(11) **EP 1 214 514 B1**
(45) Veröffentlichungstag und Bekanntmachung des Hinweises auf die Patenterteilung: **20.04.2005**
(21) Anmeldenummer: 00964199.4
(22) Anmeldetag: 19.09.2000
(51) Int. Cl.: F02M 25/07

(54) **FLUIDEINLEITUNG FÜR EIN HEISSES FLUID IN EINER HOHLRAUMSTRUKTUR**
FLUID INLET FOR A HOT FLUID INTO A HOLLOW STRUCTURE
SYSTEME POUR INTRODUIRE UN FLUIDE CHAUD DANS UNE STRUCTURE CREUSE

(30) Priorität: 24.09.1999 DE 19945769
(43) Veröffentlichungstag der Anmeldung: 19.06.2002
(73) Patentinhaber: Mann + Hummel GmbH, 71638 Ludwigsburg (DE)
(72) Erfinder: FISCHER, Jochem, 71672 Marbach (DE)
(74) Vertreter: Voth, Gerhard, Dipl.-Ing.
(86) Internationale Anmeldenummer: PCT/EP2000/009141
(87) Internationale Veröffentlichungsnummer: WO 2001/023738

(56) Entgegenhaltungen:
- EP-A- 0 736 683
- EP-A- 0 753 656
- EP-A- 0 886 063
- DE-A- 19 740 998
- PATENT ABSTRACTS OF JAPAN vol. 7, no. 106 (M-213) [1251], 10. Mai 1983 (1983-05-10) & JP 58 028583 A (TOYOTA), 19. Februar 1983 (1983-02-19)

## Beschreibung

### Stand der Technik

Die Erfindung betrifft eine Fluideinleitung, die insbesondere als Abgasrückführung in den Ansaugtrakt einer Brennkraftmaschine verwendet werden kann, nach der Gattung des Patentanspruches 1.

Die Rückführung von Abgasen in den Ansaugtrakt einer Brennkraftmaschine ist bekannt. Diese Maßnahme wird ergriffen, um die Schadstoffemission der Brennkraftmaschine zu verringern. Problematisch hierbei ist jedoch die hohe Temperatur des Abgases. Insbesondere wenn der Ansaugtrakt aus Kunststoff gefertigt ist, so kann die Einleitung des Abgases zu einem Aufschmelzen des Ansaugtraktes im Bereich der Abgaszuführung führen.

Um eine thermische Überanspruchung des Ansaugtraktes zu verhindern wird gemäß der EP 486 338 A1 vorgeschlagen, die Abgaseinleitung doppelwandig auszuführen. Das Abgas wird durch das Innenrohr in den Ansaugtrakt eingeleitet, wobei der sich zwischen der Doppelwand ergebende Hohlraum isolierend gegenüber der Kontaktstelle der Abgaseinleitung mit dem Saugrohr wirkt.

Um eine zusätzliche Kühlwirkung zu erzielen, wird durch den Zwischenraum ein Teil der angesaugten Frischluft geleitet, welche vor einer Drosselklappe entnommen wird und über eine Umgehungsleitung in den Zwischenraum gelangt. Die Kühlluft gelangt durch entsprechende Öffnungen parallel zum Abgasstrom wieder in den Ansaugtrakt.

Bei der vorgeschlagenen Lösung läßt sich allerdings der Anteil an rückgeführtem Abgas im Verhältnis zur durchgeleiteten Verbrennungsluft nicht beliebig steigern. Das doppelwandige Rohr ist direkt mit dem Saugrohr verbunden, so daß bei höheren Rückführraten dennoch die Gefahr eines Aufschmelzens der Wandung des Ansaugtraktes droht. Außerdem trifft der heiße Abgasstrom ungehindert auf die gegenüberliegende Wandung des Ansaugtraktes, wodurch auch hier ein Bereich hoher thermischer Belastung entsteht, der zu einem Bauteilversagen führen kann.

Um dies zu verhindern, kann entsprechend der Konstruktion nach der EP 886 063 A2 ein thermisch belastbares Gasführungselement 26 (vergleiche Figur 2) vorgesehen werden, welches die Wandung des Ansaugtraktes vor einem direkten Auftreffen der heißen Abgasströmung schützt. Innerhalb dieses Gasführungselementes hat der heiße Abgasstrom genügend Zeit, sich mit der Ansaugluft zu durchmischen. Außerdem wird das Gasführungselement aus hitzebeständigem Material gefertigt. Dieses Material hat eine hohe Wärmestabilität und kann deshalb Wärmespitzen in dem eingeleiteten Abgas zwischenspeichern bzw. leiten und bei Betriebszuständen geringerer Wärmeentwicklung wieder abgeben.

Dieses Bauteil bedeutet jedoch eine Erhöhung des Gewichtes der Baugruppe. Dies ist vor allem im mobilen Einsatz, wie z. B. bei Kraftfahrzeugen, nicht erwünscht. Außerdem verteuert das Gasführungselement die Material-und Herstellungskosten für den Ansaugtrakt.

Aufgabe der Erfindung ist es daher, eine Fluideinleitung zur Einleitung eines heißen Fluides in ein kühleres zu schaffen, welche kostengünstig in der Herstellung ist, ein möglichst geringes Bauteilgewicht aufweist, und die Baugruppe wirksam vor einer thermischen Belastung durch das eingeleitete Fluid schützt. Diese Aufgabe wird durch die Merkmale des Patentanspruches 1 gelöst.

### Vorteile der Erfindung

Die erfindungsgemäße Fluideinleitung besteht aus drei strukturellen Funktionsbereichen, der Hohlraumstruktur, dem Einleitstutzen und einem Einsatz. Die Hohlraumstruktur ist zur Durchleitung eines Fluid geeignet und kann z. B. aus einem Ansaugrohr für einen Verbrennungsmotor bestehen. Der Einleitstutzen ist zur Verbindung mit einer Zuführleitung geeignet, wobei durch die Zuführleitung das einzuleitende heiße Fluid geführt wird. Diese Bauteile sind miteinander verbunden.

Die beschriebene Fluideinleitung muß für die auftretenden thermischen Belastungen durch die Einleitung des heißen Fluides ausgelegt sein. Dies bedeutet, daß der Einleitstutzen temperaturbeständig gegenüber dem einzuleitendem Fluid sein muß. Für die Hohlraumstruktur kommen jedoch häufig niedriger schmelzende Werkstoffe, z. B. Kunststoff zum Einsatz. Diese würden bei einer direkten Beaufschlagung mit dem eingeleiteten Fluid aufschmelzen und zu einem Versagen der Baugruppe führen. Um dies zu verhindern ist in der Hohlraumstruktur erfindungsgemäß in dem Bereich, in dem das eingeleitete Fluid auf die Wandungen der Hohlraumstruktur treffen würde, ein Einsatz vorgesehen. Dieser Einsatz ist dadurch gekennzeichnet, daß er Wandungen aufweist, deren Innenseiten zumindest im wesentlichen mit der Strömungsrichtung des eingeleiteten Fluid ausgerichtet sind. Dadurch wird ein direktes Aufprallen des einzuleitenden Fluides auf den Einsatz verhindert. Die Strömung des einzuleitenden Fluides wird sich daher nach und nach an den Einsatz anschmiegen, wodurch wesentlich weniger Wärme an den Einsatz übertragen werden kann, als bei einem direkten Auftreffen der Strömung. Dieser Effekt wird noch dadurch unterstützt, daß sich das eingeleitete Fluid vor dem Auftreffen auf den Einsatz mit dem durchgeleiteten Fluid vermischen kann, wodurch die Vermischung eine Abkühlung des Fluidgemisches zur Folge hat. Auch dadurch wird der Einsatz thermisch entlastet.

Der erfindungsgemäße Vorteil läßt sich auf verschiedene Weise nutzen. Der Einsatz benötigt im Vergleich zu dem im Stand der Technik verwendeten Einlegeteilen eine geringere Wandstärke, wodurch Gewicht eingespart werden kann. Die geringere Wärmekapazität des Einsatzes wird durch die geringere thermische Belastung wettgemacht. Eine andere Möglichkeit besteht in der Wahl eines niedriger schmelzenden Werkstoffes für den Einsatz. Hier können sogar hoch schmelzende Kunststoffe in Erwägung gezogen werden. Dies verringert das Bauteilgewicht und läßt eine wirtschaftlichere Herstellung des Einsatzes zu. Ein Kunststoffteil läßt sich zudem z. B. durch Veraschung leichter entsorgen.

Eine dritte Möglichkeit der Nutzung des beschriebenen Vorteils liegt in einer Erhöhung der Temperatur des einzuleitenden Fluides. Hier ergibt sich insbesondere im Kraftfahrzeugbereich ein geeigneter Anwendungsfall, wenn die Fluideinleitung zur Abgasrückführung in den Ansaugtrakt einer Brennkraftmaschine genutzt wird. Hierbei wird insbesondere bei modernen Dieselmotoren eine hohe Abgasrückführrate in bestimmten Betriebszuständen gefordert um in die geforderten Abgaswerte einhalten zu können. Diese hohen Abgasrückführraten lassen sich mit wirtschaftlich gefertigten Teilen verwirklichen, wenn das beschriebene Konstruktionsprinzip verfolgt wird.

Zwischen dem Einsatz und den Wandungen der Hohlraumstruktur ist ein Zwischenraum vorgesehen. Dieser führt zu einer Isolation des Einsatzes gegenüber der Hohlraumstruktur, sofern das durchgeleitete Fluid einen schlechteren Wärmeleitungskoeffizient aufweist, als die genannten Bauteile. Der Hohlraum kann als Bypassleitungsabschnitt für das durchgeleitete Fluid ausgelegt sein. Die hier durchgeleitete Strömung vermischt sich dann nicht mit dem eingeleiteten Fluid, so daß sie zusätzliche Kühlungseigenschaften gegenüber dem sich erwärmenden Einsatz aufweist. Auf diese Weise kann die thermische Belastung der Einsatzes weiter verringert werden.

Die Wandungen des Einsatzes sind mit Durchbrüchen versehen, die den beschriebenen Zwischenraum mit der Innenseite des Einsatzes verbinden. Die Fuidströmung entlang der Innenseiten des Einsatzes bewirkt an den Durchbrüchen einen Saugstrahlpumpeneffekt, der das bereits erwähnte kühle, durchzuleitende Fluid aus dem Zwischenraum absaugt. An den Innenseiten strömt das durchzuleitende Fluid, welches sich gerade mit dem eingeleiteten Fluid durchmischt und dadurch erwärmt wird. Das durch die Durchbrüche angesaugte Fluid bildet zunächst einen Film auf der Innenseite des Einsatzes, wodurch ein kühlender Schild entsteht, der den wärmeren von innen angreifenden Fluidstrom verdrängt. Auf diese Weise läßt sich die thermische Belastung des Einsatzes weiter verringern, wodurch die beschriebenen Vorteile der Erfindung effizienter genutzt werden können.

Die beschriebenen Strömungseffekte lassen sich besonders effizient nutzen, wenn die Wandungen des Einsatzes gemäß einer besonderen Ausgestaltung der Erfindung ringförmig geschlossen sind. Damit entsteht eine von den Innenseiten des Einsatzes eingeschlossene Mischstrecke, in die das einzuleitende Fluid zusammen mit dem durchzuleitenden Fluid eintritt. Dabei ist es vorteilhaft, die Mischstrecke mit einem kreisförmigen Querschnitt zu versehen. Durch derartige regelmäßige Querschnittsformen, können die an der Fluideinleitung herrschenden Strömungszustände am zuverlässigsten beeinflußt werden.

Einer weitere Variante der Erfindung erhält man, wenn man den Einleitstutzen mit einer Krümmung versieht. Diese wird so gewählt, daß eine Umleitung des einzuleitenden Fluides in Richtung des durchgeleiteten Fluides erfolgt. Auf diese Weise kann der Einsatz optimal in der Hohlraumstruktur ausgerichtet werden, so daß er weder dem durchzuleitendem Fluid noch dem eingeleiteten Fluid einen großen Strömungswiderstand entgegensetzt. Dies ist von Vorteil, da auf diese Weise die Möglichkeit eines Wärmeaustausches zwischen den erwärmten Fluiden und dem Einsatz verringert wird.

Eine weitere vorteilhafte Gestaltung der Mittel zur Verminderung der Wärmeeinleitung besteht in einem doppelwandigen Konstruktionsprinzip des Einleitstutzens. Dieser besitzt eine Innenwand und eine Außenwand, wobei das im Zwischenraum dieser Wände befindliche Fluid als Isolator wirkt. Das einzuleitende Fluid wird durch den durch die Innenwand gebildeten Querschnitt geleitet.

Eine alternative Lösung für die Fluideinleitung sieht vor, den Einleitstutzen im Endbereich, der in den Innenraum der Hohlraumstruktur hineinreicht, mit Austrittsöffnungen zu versehen, die in Richtung der Flußrichtung des durchgeleiteten Fluides weisen. Durch diese konstruktive Maßnahme wird der Strom des einzuleitenden Fluides in Richtung der Strömung in der Hohlraumstruktur eingeleitet. Das einzuleitende Fluid wird unter Ausnutzung des Saugstrahlpumpeneffektes von der Strömung des durchgeleiteten Fluides erfaßt und mitgerissen, wodurch eine schnelle Durchmischung stattfindet. Die Durchmischung bewirkt gleichzeitig eine Abkühlung des einzuleitenden Fluides und eine Erwärmung des durchzuleitenden Fluides. Die resultierende Temperatur liegt jedoch im Bereich der zulässigen thermischen Beanspruchung der Innenseite des Einsatzes.

Die Austrittsöffnungen sind entlang der Flanken am Endbereich des Einlaßstutzens angeordnet. Die Vielzahl der Öffnungen verbessert den Durchmischungseffekt, da der Fluidstrom des einzuleitenden Fluides in viele kleine Teilströme aufgebrochen wird.

Gemäß einer weiteren Ausgestaltung der Erfindung sind die Austrittsöffnungen mit Leitblechechen versehen. Insbesondere, wenn der Einleitstutzen aus Blech gefertigt ist, lassen sich diese Leitbleche auf einfache Weise durch Stanzen erzeugen. Bevorzugt sind die Leitbleche in das Innere des Einlaßstutzens hineingebogen und bewirken damit eine optimale Vermischung des einzuleitenden Fluides mit dem durchzuleitenden Fluid. Außerdem bewirken die Leitbleche ein Anlegen des einzuleitenden Fluidstroms beim Austritt an den Endbereich des Einleitstutzens, wodurch ein direkter Wandkontakt des einzuleitenden Fluides mit den Wandungen der Hohlraumstruktur vermieden wird. Dieser erfolgt erst nach einer genügenden Durchmischungsstrecke im weiteren Verlauf der durchzuleitenden Strömung in der Hohlraumstruktur.

Um die Durchmischung der beiden Fluide weiter zu fördern, ist es vorteilhaft, den Einleitstutzen bezogen auf die durchgeleitete Strömung in der Hohlraumstruktur mit einer strömungsoptimierten Außenkontur zu versehen. Beim Umströmen des Einleitstutzens ergibt sich dann eine laminare Strömung entlang der Außenkontur des Einleitstutzens, insbesondere dessen Endbereiches. Dadurch wird das Durchmischungsergebnis mit dem einzuleitenden Fluids verbessert.

Für eine großtechnische Herstellung wird die Verbindungsstruktur gemäß einer zweckmäßigen Ausbildung des Erfindungsgedankens als Bajonettverschluß gefertigt. Es entsteht damit ein Modul, welches einfach in Hohlraumstrukturen eingegliedert werden kann. Insbesondere wenn diese aus Kunststoff sind, läßt sich die entsprechende Aufnahme als Gegenstück des Bajonettverschlusses einfach in die Wandstruktur integrieren. Einleitstutzen und Verbindungsstruktur können dann als Standartbauteil ausgeführt werden, wodurch sich hohe Stückzahlen erreichen lassen. Dies führt zu einer erhöhten Wirtschaftlichkeit der Lösung. Durch den Bajonettverschluß läßt sich die Fluideinleitung leicht montieren, wobei auch der verringerte Montageaufwand zu einer weiteren Steigerung der Wirtschaftlichkeit der Fluideinleitung beiträgt.

### Zeichnungen

Ein Ausführungsbeispiel der Erfindung wird nachfolgend anhand von Zeichnungen erläutert. Hierbei zeigen.
- Figur 1: den Längsschnitt durch eine Fluideinleitung und
- Figur 2: das Detail X gemäß Figur 1 wobei verschiedene Fluidströme schematisch durch Pfeile dargestellt sind.

### Beschreibung der Ausführungsbeispiele

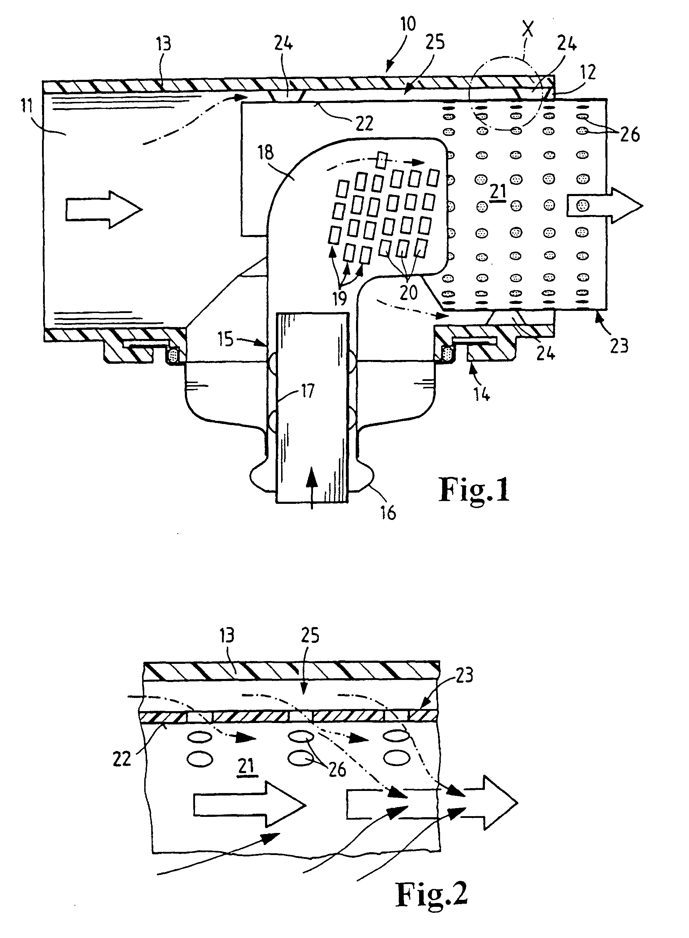

Eine Fluideinleitung 10 gemäß Figur 1 stellt einen Ausschnitt aus einem sonst nicht dargestellten Ansaugtrakt für eine Brennkraftmaschine dar. Dieser besteht aus einer Hohlraumstruktur 13, welche mit einem Einlaß 11 und einem Auslaß 12 versehen ist, um den Luftstrom der Ansaugluft, gekennzeichnet durch breite Pfeile, durchleiten zu können. Einlaß und Auslaß können als Schnittstellen des betrachteten Systems der Fluideinleitung aufgefaßt werden. Über einen Bajonettverschluß 14 ist in die Hohlraumstruktur ein Einleitstutzen 15 befestigt. Dieser weist einen Anschluß 16 auf, der mit einer nicht dargestellten Abgaszuleitung verbunden werden kann. Der Strom des Abgases ist durch dünne Pfeile gekennzeichnet. Der Einleitstutzen ist doppelwandig ausgeführt, wobei das Innenrohr 17 der Isolierung dient, so daß eine übermäßige Erwärmung der Hohlraumstruktur 13 über den Bajonettverschluß vermieden wird. Dem doppelwandigen Teil des Einleitstutzens schließt sich eine Krümmung 18 an, die das Abgas in Richtung der Ansaugluft umleitet. In diesem Bereich der Krümmung sind Austrittsöffnungen 19 vorgesehen, die Leitbleche 20 aufweisen und so eine gerichtete Einleitung des Abgases in die Hohlraumstruktur ermöglichen. Der gekrümmte Bereich des Einleitstutzens ist flach ausgeführt, so daß dieser durch die Ansaugluft problemlos umströmt werden kann und dabei das Abgas mitreißt.

Die Austrittsöffnungen 19 münden in eine Mischstrecke 21, die durch die Innenseite 22 eines rohrförmigen Einsatzes 23 gebildet wird. Der Einsatz wird durch Montagerippen 24 in der Hohlraumstruktur 13 gehalten. Er weist einen geringeren Außendurchmesser auf, als der Innendurchmesser der Hohlraumstruktur. Auf diese Weise wird ein Zwischenraum 25 gebildet, der durch die Ansaugluft durchrströmbar ist. Dieser Nebenluftstrom ist durch gestrichelte Pfeile gekennzeichnet.

Der genaue Verlauf des Nebenstroms der Ansaugluft im Zwischenraum 25 läßt sich Figur 2 entnehmen. Dieser strömt durch den Zwischenraum 25 in dieselbe Richtung wie der Hauptluftstrom der Ansaugluft (breite Pfeile) und gelangt durch Durchbrüche 26 durch die Wandung des Einsatzes in die Mischstrecke 21. Dort wird sie von der Hauptströmung mitgerissen und bildet gleichzeitig einen dünnen Film kalter Ansaugluft auf der Innenseite 22 des Einsatzes. Gleichzeitig vermischt sich in einiger Entfernung von der Innenseite der Hauptluftstrom mit dem eingeleiteten Abgas (durchgezogene dünne Pfeile). Dabei stellt sich eine mittlere Temperatur des Hauptluftstroms ein, die für die Wandungen der Hohlraumstruktur, die hinter der Mischstrecke liegen und nicht dargestellt sind, erträglich sind.

## Patentansprüche

1. Fluideinteltung, insbesondere Abgasrückführung in den Ansaugtrakt einer Brennkraftmaschine, bestehend aus
- einer Hohlraumstruktur (13) zur Durchleitung eines Fluides von einem Einlaß (11) zu einem Auslaß (12),
- einem Einleitstutzen (15) zur Einleitung eines Fluides, welches wärmer als das durchgeleitete Fluid ist, in die Hohlraumstruktur und
- einem Einsatz (23), welcher in der Hohlraumstruktur mit einer Innenseite (22) im Bereich des durch den Einleitstutzen eingeleiteten Fluides angebracht ist,
wobei der Einleitstutzen eine höhere Temperaturbeständigkeit aufweist, als die Hohlraumstruktur und der Einleitstutzen gegenüber dem einzuleitenden Fluid temperaturbeständig ist und der Einsatz (23) die Wandungen der Hohlraumstruktur gegen das eingeleitete Fluid abschirmt,
wobei die Wandungen des Einsatzes (23) zumindest im wesentlichen in der Strömungsrichtung des eingeleiteten Fluides ausgerichtet sind und zwischen dem Einsatz (23) und den Wandungen der Hohlraumstruktur (13) ein Zwischenraum (25) vorgesehen ist
**dadurch gekennzeichnet, daß** die Wandungen des Einsatzes mit Durchbrüchen (26) versehen sind, die die Innenseite (22) mit dem Zwischenraum (25) verbinden.

2. Fluideinleitung nach Anspruch 1, **dadurch gekennzeichnet, daß** die Wandungen des Einsatzes ringförmig geschlossen sind, so daß die Innenseiten (22) eine Mischstrecke (21) bilden.

3. Fluideinleitung nach Anspruch 2, **dadurch gekennzeichnet, daß** die Mischstrecke (21) einen kreisförmigen Querschnitt aufweist.

4. Fluideinleitung nach einem der vorherigen Ansprüche, **dadurch gekennzeichnet, daß** der Einleitstutzen (15) eine Krümmung (18) zur Umleitung des einzuleitenden Fluides in Richtung des durchgeleiteten Fluides aufweist.

5. Fluideinleitung nach einem der vorherigen Ansprüche, **dadurch gekennzeichnet, daß** der Einleitstutzen (15) doppelwandig ausgeführt ist und das einzuleitende Fluid durch ein Innenrohr (17) des Einleitstutzens geführt ist.

6. Fluideinleitung nach einem der vorherigen Ansprüche, **dadurch gekennzeichnet, daß** Austrittsöffnungen (19) mit Leitblechen (20) zur Beeinflussung der Strömungsrichtung des eingeleiteten Fluides am Einleitstutzen versehen sind.

7. Fluideinleitung nach einem der vorherigen Ansprüche, **dadurch gekennzeichnet, daß** der Einleitstutzen (15) in dem Bereich der Fluideinleitung eine strömungsoptimierte Außenkontur hinsichtlich der durchgeleiteten Strömung aufweist.

8. Fluideinleitung nach einem der vorherigen Ansprüche, **dadurch gekennzeichnet, daß** der Einleitstutzen (15) mit einem Bajonettverschluß (14) in der Hohlraumstruktur (13) befestigt ist.

## Claims

1. Fluid inlet, more especially exhaust gas recirculation into the intake tract of an internal combustion engine, said fluid inlet comprising
- a hollow structure (13) for conducting a fluid from an inlet (11) to an outlet (12),
- an inlet connection (15) for introducing a fluid, which is hotter than the fluid being conducted, into the hollow structure and
- an insert (23), which is mounted in the hollow structure with one inside surface (22) in the region of the fluid introduced through the inlet connection,
wherein the inlet connection has a higher resistance to temperature than the hollow structure and the inlet connection is temperature resistant relative to the fluid to be introduced and the insert (23) shields the walls of the hollow structure against the introduced fluid,
wherein the walls of the insert (23) are aligned at least substantially in the direction of flow of the introduced fluid and an intermediate space (25) is provided between the insert (23) and the walls of the hollow structure (13),
**characterised in that** the walls of the insert are provided with openings (26), which connect the inside surface (22) to the intermediate space (25).

2. Fluid inlet according to claim 1, **characterised in that** the walls of the insert are closed in a ring-shaped manner, such that the inside surfaces (22) form a mixing section (21).

3. Fluid inlet according to claim 2, **characterised in that** the mixing section (21) has a circular cross-section.

4. Fluid inlet according to one of the preceding claims, **characterised in that** the inlet connection (15) includes a curvature (18) for diverting the fluid to be introduced in the direction of the conducted fluid.

5. Fluid inlet according to one of the preceding claims, **characterised in that** the inlet connection (15) is double-walled and the fluid to be introduced is guided through an inner pipe (17) of the inlet connection.

6. Fluid inlet according to one of the preceding claims, **characterised in that** outlet openings (19) are provided with baffles (20) for influencing the direction of flow of the fluid introduced at the inlet connection.

7. Fluid inlet according to one of the preceding claims, **characterised in that**, in the region of the fluid inlet, the inlet connection (15) has a flow-optimised outer contour with regard to the conducted flow.

8. Fluid inlet according to one of the preceding claims, **characterised in that** the inlet connection (15) is secured by means of a bayonet closure (14) in the hollow structure (13).

## Revendications

1. Système pour introduire un fluide, notamment un recyclage de gaz d'échappement dans la course d'admission d'un moteur à combustion interne, composé
- d'une structure creuse (13) qu'un fluide traverse d'une entrée (11) vers une sortie (12),
- d'un support d'introduction (15) pour introduire dans la structure creuse un fluide plus chaud que le fluide qui traverse; et
- un embout (23) appliqué dans la structure creuse avec un côté intérieur (22) dans la zone du fluide introduit par le support d'introduction,
le support d'introduction présentant une plus grande résistance thermique que la structure creuse, le support d'introduction étant résistant à la chaleur par rapport au fluide à introduire, et l'embout (23) blindant les parois de la structure creuse contre le fluide introduit, les parois de l'embout (23) étant orientées au moins essentiellement dans le sens d'écoulement du fluide introduit, avec un espace intermédiaire (25) prévu entre l'embout (23) et les parois de la structure creuse (13) ,
**caractérisé en ce que**
les parois de l'embout (23) sont munies de passages (26) reliant le côté intérieur (22) à l'espace intermédiaire (25).

2. Système pour introduire un fluide selon la revendication 1,
**caractérisé en ce que**
les parois de l'embout (23) forment un anneau fermé pour que les côtés intérieurs (22) forment un trajet mélangeur (21).

3. Système pour introduire un fluide selon la revendication 2,
**caractérisé en ce que**
le trajet mélangeur (21) présente une section circulaire.

4. Système pour introduire un fluide selon l'une quelconque des revendications précédentes,
**caractérisé en ce que**
le support d'introduction (15) présente une courbure (18) pour dévier le fluide à introduire dans le sens du fluide qui traverse.

5. Système pour introduire un fluide selon l'une quelconque des revendications précédentes,
**caractérisé en ce que**
le support d'introduction (15) a une double paroi et le fluide à introduire est guidé à travers un tube interne (17) du support d'introduction.

6. Système pour introduire un fluide selon l'une quelconque des revendications précédentes,
**caractérisé en ce que**
les orifices de sortie (19) sont munis de tôles conductrices (20) pour influencer le sens d'écoulement du fluide introduit au niveau du support d'introduction.

7. Système pour introduire un fluide selon l'une quelconque des revendications précédentes,
**caractérisé en ce que**
le support d'introduction (15) présente, dans la zone d'introduction du fluide, un contour extérieur optimisé pour l'écoulement du fluide qui traverse.

8. Système pour introduire un fluide selon l'une quelconque des revendications précédentes,
**caractérisé en ce que**
le support d'introduction (15) est fixé par un raccord à baïonnette (14) dans la structure creuse (13).
